# EUROPÄISCHE PATENTSCHRIFT

(11) **EP 1 586 365 B1**
(45) Veröffentlichungstag und Bekanntmachung des Hinweises auf die Patenterteilung: **24.04.2013**
(21) Anmeldenummer: 05003993.2
(22) Anmeldetag: 24.02.2005
(51) Int. Cl.: B01D 53/86, C01B 21/26, B01J 23/46

(54) **Verwendung eines Katalysators zur Zersetzung von Distickstoffmonoxid (N2O) beim Ostwaldprozess**
Use of a catalyst for the decomposition of nitrous oxide (N2O) in the Ostwald process
Utilisation d'un catalyseur pour la décomposition d'oxyde nitreux (N2O) dans le procédé d'Ostwald

(30) Priorität: 11.03.2004 DE 102004012333; 13.05.2004 DE 102004024026
(43) Veröffentlichungstag der Anmeldung: 19.10.2005
(73) Patentinhaber: Heraeus Materials Technology GmbH & Co. KG, 63450 Hanau (DE)
(72) Erfinder: Jantsch, Uwe, Dr., 63579 Freigericht (DE); Lund, Jonathan, 65779 Kelkheim (DE); Kraus, Marcus, Dr., 63486 Bruchköbel (DE); Gorywoda, Marek, Professor Dr., 95028 Hof (DE)
(74) Vertreter: Kühn, Hans-Christian

(56) Entgegenhaltungen:
- WO-A2-2004/096702
- DE-A1- 10 016 276
- DE-A1-102004 024 026
- JP-A- 6 142 509
- JP-A- 6 142 517
- JP-A- 6 182 203

## Beschreibung

Gegenstand der Erfindung ist die Verwendung eines Katalysators zur Zersetzung von N₂O, das bei der katalytischen Oxidation von Ammoniak nach dem Ostwaldverfahren als Nebenprodukt anfällt.

Die katalytische Ammoniakverbrennung zur Herstellung von Salpetersäure ist bekannt (Ostwald-Verfahren). Die Ammoniakverbrennung zur großtechnischen Erzeugung von NO als erstes Verfahrensprodukt wird bei hoher Temperatur (in der Regel 800 -950°C) an z.B. PtRh- oder PtRhPd-Legierungskatalysatoren durchgeführt. Diese werden für gewöhnlich in Form von gewirkten oder gestrickten Netzen in mehreren Lagen übereinander im Reaktor aufgeschichtet. Für die Herstellung dieser Netze wird üblicherweise PtRh oder PtRhPd-Draht mit einem Durchmesser von beispielsweise 76 µm eingesetzt.

Da bei der Ammoniakverbrennung Edelmetall in Form von Oxid über die Gasphase verlorengeht, wird üblicherweise unter den Katalysatornetzen ein System von Rückgewinnungsnetzen angeordnet mit denen ein Teil des Platins aufgefangen wird. In einer Austauschreaktion mit dem Platin geht statt dessen das leichtere und preisgünstigere Palladium in die Gasphase über.

Bei der Salpetersäureherstellung wird das zunächst an den Katalysatornetzen entstehende NO zu NO₂ aufoxidiert. Nach dem Abkühlen wird der Gasstrom in Absorptionstürme geleitet und die Stickoxide in Wasser absorbiert. Mit zusätzlichem Sauerstoff erfolgt dann die Umsetzung zu Salpetersäure.

Als Nebenprodukte der Ammoniakverbrennung entstehen Stickstoff und N₂O. Im Gegensatz zu NO und NO₂ geht N₂O keine weiteren Reaktionen ein und wird nach Durchlaufen aller Prozessstufen an die Atmosphäre abgegeben. Bei der Verwendung von konventionellen Kalysatornetzen und Rückgewinnungsnetzen werden zwischen 500 und 3000 ppm N₂O in die Umgebung abgegeben, wenn keine nachfolgende N₂O-Entfernung vorgenommen wird (EP 1 076 634 B1). N₂O wurde vor einiger Zeit als klimaschädigendes Gas eingestuft, da es sowohl einen negativen Einfluss auf die Ozonschicht hat als auch zur globalen Erwärmung beiträgt. Da sein Potential zur globalen Erwärmung ca. 310 mal größer als das von CO₂ ist, haben bereits relativ geringe Emissionen an N₂O einen deutlichen Anteil an der globalen Erwärmung. Aus diesem Grund ist man bemüht, anthropogene N₂O Emissionen zu reduzieren.

Es soll also der N₂O-Gehalt im Produktgas der Ammoniakverbrennung reduziert werden. Dies kann entweder durch verringerte Bildung des N₂O oder dessen Zersetzung ereicht werden.

Zur Zersetzung von Lachgas wurden bereits einige Arten von Katalysatoren vorgeschlagen. Die Anwendungen und Anforderungen sind dabei verschieden, je nachdem, ob es sich um die Abgasreinigung, die Lachgaszerstörung aus überschüssigem Narkosegas oder die Entfernung von Ammoniak aus Industrieabgasen handelt. Auch das Trägermaterial übt einen Einfluss aus. Beispielsweise bewirkt Rhodium(-oxid) auf gamma-Al₂O₃ keine Reduktion von N₂O im Ostwaldprozess. Bei Abgaskatalysatoren wird dagegen hauptsächlich und auch mit Vorteil gamma-Al₂O₃ eingesetzt.

Bei Abgaskatalysatoren sind beispielsweise Systeme mit Pt, Rh, Ru, und/oder Ir bekannt: Z.B. wird in JP 06142509 Rh zu 0.3 bis 2 Gew.-% auf alpha-Al₂O₃ für Temperaturen von 300 bis 500°C zur N₂O Entfernung empfohlen. Dort werden auch Ru und Ir als Katalysatoren genannt. Diese Metalle wirken wiederum beim Ostwaldprozess überhaupt nicht. JP 06182203 betrifft fluoridhaltige Träger für Edelmetallkatalysatoren als Abgaskatalysatoren.

JP 6142517 A1 beschreibt alpha-Al₂O₃-geträgerte Katalysatoren mit Rh oder Ru und mindestens einem der Oxide des Ti, Zr oder Nb. Auch hier gilt, dass Ru für den Ostwaldprozess ungeeignet ist. Weiterhin sind Titan und Nioboxide ungeeignet. Wegen der Identität des Anmelders von JP 06142509 A1, JP06182203 A1 und JP 6142517 A1 ist anzunehmen, dass es sich ebenfalls um Abgaskatalysatoren handelt.

Ru oder Pd auf SiO₂ oder Al₂O₃ dienen gemäß JP 2002253967 A1 auch zur Zerstörung von Lachgas, das als Narkosegas überschüssig ist. Entsprechende Reaktoren sind Stahlrohre, die mit edelmetallbeschichteten Al₂O₃-Kömern gepackt sind und bei 150 bis 550°C betrieben werden (JP 55031463 A1). Auch hier kommen die unterschiedlichen Anforderungen dadurch zum Ausdruck, dass Ru sowie Pd im Ostwaldprozess keine Wirkung hat und SiO₂ unter den Bedingungen im Ostwaldprozess chemisch nicht stabil ist

Gemäß DE 40 20 914 A1 wird Ammoniak nahezu ohne Lachgasbildung verbrannt, wenn es mit Pt, Pd, Rh oder Ir in Kombination mit mindestens einem der Oxide von Mo, V in Kontakt gebracht wird. Das beschriebene Verfahren dient allerdings nicht der großtechnischen NH₃-Verbrennung, sondern der Entfernung geringer Konzentrationen NH₃ aus Abgasen.

Reines Lachgas kann laut DE 35 43 640 an Pd auf z.B. Korund, Tonerde oder Kieselsäuren gut zersetzt werden. Palladium ist aber völlig inaktiv bei Reduktion von N₂O im Ostwaldprozess.

Speziell für den Einsatz beim Ostwald-Verfahren sind z.B. folgende Systeme bekannt geworden:

DE 198 19 882 A1 beschreibt einen Katalysator zur N₂O-Zersetzung, der nach dem Netzkatalysator und vor dem Wärmeaustausch geschaltet wird und als Festbett angelegt ist. Im besonderen handelt es sich um eine Kombination von CuO·Al₂O₃ mit Zinn oder Blei.

Aus DE 41 28 629 A1 ist eine Al₂O₃ geträgerter Silber-Katalysator bekannt.

Gemäß DE 100 16 276 A1 werden CuO-haltige Katalysatoren vorgeschlagen. Im industriellen Maßstab getestet wurde z.B. ein Katalysator auf CuO-Al₂O₃-Basis. Es wurde eine Reduktion von 80-90% N₂O in einer bei atmosphärischem Druck arbeitenden - und von ca. 70% N₂O bei einer Mitteldruckanlage (5,5 bar) in Antwerpen erreicht. (G.Kuhn: Proceedings of the Krupp Uhde Technologies Users Group Meeting 2000, Wien, 12-16 März 2000). Die NO-Verluste wurden mit < 0,5 % angegeben. In (Applied Catalysis B: Environmental 44(2003) S.117-151) wird darauf hingewiesen, dass Kupfer aus dem Katalysator herausgelöst werden könnte. Da die Ammoniumnitratzersetzung durch Kupfer katalysiert wird, bestünde hier ein ernstes Sicherheitsproblem.

In Anspruch 3 und Abs [0015] der DE10016276A1 werden Katalysatorschichten auf Trägern aufgelistet, die Komponenten der im vorliegenden verwendeten Katalysatoren aufweisen, nicht jedoch in den Beispielen.

Laut US 2004023796 wurde ein Katalysator zur Zersetzung von N₂O bei 250-1000°C auf Basis von Co-Oxid-Spinellen auf CeO₂-Träger entwickelt (Co₃-xMxO₄, wobei M Fe oder Al und x 0 bis 2 sind). Die NO-Verluste wurden mit < 0,2% angegeben. Ähnliche Cobaltoxid-haltige Systeme sind auch für die Ammoniakoxidation selbst bereits empfohlen worden (EP0946290B1).

US 5,478,549 beschreibt den Einsatz von ZrO₂ als N₂O-Zersetzungskatalysator. Entsprechend wird diese Lehre in WO 0051715 dadurch erweitert, dass den ZrO₂-Pellets bei deren Herstellung Eisen und optional Übergangsmetalle beigemischt werden können.

Ein Mischoxidkatalysator (ZrO₂ und Al₂O₃) ist Gegenstand der WO 9964139. Der mit einem Zirkoniumsalz imprägnierte Katalysator soll zum Teil N₂O (ca. 15%) zu NO umsetzen. Das N₂O soll insgesamt zu 78 -99% abgebaut werden. Die erforderliche Katalysatormenge ist aber sehr groß und erfordert in der Regel einen Umbau des Konverters.

Gemäß W00496702A2 wird als nachgeschalteter Zweitstufen Katalysator ein Katalysator mit Fähigkeit zur Lachgaszerstörung vorgeschlagen. Dort ist gamma-Al2O3 der unmittelbare Träger für Rh (Beispiel 1A). alpha-Al2O3 wird als struktureller Träger für einen Rh-Washcoat- Katalysator benutzt (Beispiel 1B), nicht jedoch als unmittelbarer Träger.

Die meisten dieser Katalysatoren zeigen Mängel, die sicherheitstechnischer Art sein können - wie bei dem oben beschriebenen Katalysator auf CuO-Al₂O₃ Basis - oder sie sind unter den Bedingungen im Reaktor nicht ausreichend stabil. Das betrifft sowohl die katalytisch aktive Komponente als auch die Stützstruktur die gleichzeitig eine stabilisierende Funktion gegenüber der katalytisch aktiven haben kann.

Es besteht weiterhin ein Bedarf nach Katalysatorsystemen, die N₂O unter den Bedingungen des Ostwald Prozesses effizient entfernen.

Dabei sollten die Katalysatoren folgende Anforderungen erfüllen
- Die Zersetzung von NO darf nicht katalysiert werden, da dadurch die Effizienz des Verfahrens verringert werden würde.
- Wenn es sich um einen Festbettkatalysator handelt, muss dieser eine sehr hohe Aktivität aufweisen und darf nur einen äußerst geringen Druckabfall über die Höhe des Katalysatorbettes verursachen. Ein erhöhter Druckverlust kann ebenfalls zu einem Effizienzverlust bei der HNO₃-Herstellung führen, insbesondere, wenn eine weitere Druckerhöhung mit der vorhandenen technischen Anlage nicht möglich ist.
- Der Katalysator sollte keine Umdimensionierung der vorhandenen Konverter nötig machen

Erfindungsgemäß wird die Verwendung eines Katalysators umfassend Rhodium bzw. Rhodiumoxid verbunden mit einem geeignetem Trägermaterial zur Verfügung gestellt, der eine überraschend vollständige Lachgaszerstörung bewirkt und besonders für die sogenannten FTC Netze geeignet ist (vgl. DE 195 43 102 C1.Bei diesen Systemen wird ein Mehrschichtsystem ohne extra Netze zur Rückgewinnung (Catchment traps) eingesetzt). Besonders bevorzugt liegt der Katalysator als Festbettkatalysator vor.

Wie oben gefordert, darf ein solcher Katalysator nicht das erste Hauptprodukt des Ostwaldprozesses, NO, reduzieren. Keramische Materialien wie z.B. alpha Al₂O₃, das bereits als mechanisches Stützmaterial für Netzkatalysatoren eingesetzt wird sowie die US 5,47,8549 empfohlenen Oxide ZrO₂ oder CeO₂ werden unter den speziellen Reaktionsbedingungen als chemisch stabil angesehen. Diese können daher mit Vorteil als Katalysatorträger für den erfindungsgemäßen Katalysator eingesetzt werden.

Die Rolle des Rhodiums in Bezug auf das N₂O-Problem wird im Stand der Technik eher negativ bewertet: Untersuchungen der Firma OMG haben gezeigt, dass Rhodium in Legierung mit Platin bei der Verbrennung von Ammoniak eher eine stärkere N₂O-Bildung bewirkt (Nitrogen & Methanol, No.265, Sept./Okt. 2003, Seiten 45-47).

Überraschenderweise hat sich jedoch gezeigt, dass Rhodium bzw. Rhodiumoxid, geträgert auf alpha-Al₂O₃ und/oder ZrO₂ eine hohe katalytische Wirkung gerade beim Abbau von N₂O aufweist. Außerdem hat sich gezeigt, dass Palladium/ Rhodium-Mischkatalysatoren äußerst effizient bei der Zersetzung von N₂O im Ostwaldprozess eingesetzt werden können, obwohl reines Palladium oder auch Palladium-Nickel Mischkatalysatoren N₂O überhaupt nicht reduzieren (US 2003/0124046 A1).

Vorteilhaft ist es, wenn das an den Katalysatornetzen bei der Verbrennung von Ammoniak in einer Nebenreaktion entstehende N₂O mit einem nachgeschalteten Katalysator abgebaut wird, wobei der Gasstrom durch das stromabwärts angeordnete Katalysatorbett geführt wird. Der Katalysator kann dabei direkt nach den Katalysatornetzen oder im Fall der Verwendung von Netzen zur Rückgewinnung von Platin ("Catchment traps") nach diesen Rückgewinnungsnetzen angeordnet werden, wie es z.B. in US 5,478,549 beschrieben wurde.

Die erforderliche Betriebstemperatur für den N₂O-Zersetzungskatalysator wird durch die Betriebstemperatur bei der Ammoniakverbrennung bestimmt. Diese Temperatur liegt nicht unter 750°C und nicht über 1000°C, bei bekannten Reaktortypen zwischen 800 und 950°C. Die Reaktoren arbeiten je nach Anlagentyp bei einem Druck zwischen 1 und 15 bar. Die Bedingungen, unter denen die katalytische Reaktion zum Abbau von N₂O stattfindet, stellen mithin sehr hohe Anforderungen an das Katalysatormaterial: Bei nicht ausreichender chemischer Beständigkeit kann z.B. ein Auslaugen des Katalysators über längere Zeit zur Anreicherung von Katalysatorbestandteilen im Endprodukt (z.B. Düngemittel) führen. Das kann sich negativ auf deren sichere Handhabbarkeit auswirken (Explosionsgefahr durch Herabsetzung des Zündpunkts).

Bei den bekannten Katalysatoren werden diese Anforderungen nur teilweise erfüllt.

Besonders vorteilhaft wird der Katalysator erfindungsgemäß in Verbindung mit den sog. FTC Systemen verwendet (DE 195 43 102 C1). Der Einsatz besonderer Legierungen und Mikrostrukturen ermöglicht es, die eingesetzten Mengen an teuren Edelmetallen drastisch zu reduzieren, ohne die Umsetzungseffizienz und die Laufzeit des Katalysators zu verringern. Schon dadurch hat man deutlich geringere N₂O-Werte im Produktgas der Ammoniakverbrennung gegenüber Standard Katalysator/Catchment -Netzsystemen erhalten. Durch Kombination mit dem erfindungsgemäßen N₂O-Zersetzungskatalysator können die N₂O-Werte noch weiter gesenkt werden. Dabei wird auch der Kostenvorteil der weniger teures Edelmetall enthaltenden FTC-Systeme genutzt.

Erfindungsgemäß wird als Katalysator Rhodium bzw. Rhodiumoxid, geträgert auf alpha-Al₂O₃ oder ZrO₂ oder Palladium-Rhodium auf alpha-Al₂O₃verwendet. Letzteres führt bei Einsatz als N₂O Katalysator im Ostwaldprozess zu einer deutlichen Reduktion von N₂O.

Rhodium wird unter den Reaktionsbedingungen, die im Reaktor stromabwärts der Netze vorliegen, stets zu Rhodiumoxid oxidiert, so dass im Ergebnis die katalytisch wirksame Komponente Rhodiumoxid ist.

Untersuchungen unter realen Prozessbedingungen haben gezeigt, dass alpha-Al₂O₃ und ZrO₂-Trägermaterialien, beschichtet mit Rhodium bzw. Rhodiumoxid, auch über lange Zeit ihre katalytische Aktivität beibehalten. In Frage kommen auch Trägermaterialien, die beide Oxide enthalten, sowie CeO₂ allein oder zusammen mit den genannten Stoffen oder Kombinationen.

Dagegen ist z.B. Rh, geträgert auf gamma-Al₂O₃, angeordnet unterhalb der Katalysatornetze, zur Reduktion von N₂O völlig ungeeignet. Ebenso hat sich Rhodium bzw. Rhodiumoxid, geträgert auf TiO₂ , als untauglich für die Reduktion von N₂O unter den speziellen Bedingungen des Ostwaldprozesses gezeigt.

Die katalytische Aktivität von Rhodium bzw. Rhodiumoxid, geträgert auf alpha-AI₂O₃ oder ZrO₂ , ist so hoch, dass eine Schütthöhe von 3 cm Katalysatorpellets ausreicht, um in einer Mitteldruckanlage den N₂O-Gehalt auf unter 200 ppm zu reduzieren.

Verwendet man an Stelle der Pellets übliche Raschigringe und beschichtet diese z.B. mit einem Rh/Oxidkeramik-Washcoat, wird der Druckverlust über das Katalysatorsystem unverändert beibehalten. Voraussetzung ist aber, das der Washcoat vor der Beschichtung mit Rh bei hoher Temperatur >900°C getempert wird um stabile Oxyde zu erhalten. Diese Verfahrensweise eignet sich für Abgaskatalysatoren kaum. Für den Ostwaldprozess erreicht man aber damit eine überraschend hohe katalytische Aktivität bei äußerst geringem Druckverlust. Dieses Verfahren lässt sich auch auf andere Trägermaterialien unterschiedlicher geometrischer Form übertragen.

Auch andere bekannte Trägermaterialien wie keramische Schäume oder Wabenstrukturen sind verwendbar. Eine weitere Möglichkeit stellt auch die Beschichtung von oftmals als Trennnetz zwischen den Catchment-Netzen verwendeten Kanthal bzw. Megapyr-Netzen mit Rhodium oder mit Rh/ZrO₂-Washcoat dar. Sowohl die Trennnetze als auch zusätzliche, unter den Catchment-Netzen angeordnete Netze können mit Rhodium bzw. Rhodium/Washcoat beschichtet werden und bewirken eine deutliche Reduzierung der N₂O-Werte.

Besonders vorteilhaft ist die erfindungsgemäße Anwendung des Materials, wenn es zusammen mit einem FTC-System zur Anwendung kommt. Die Trennnetze, die zwischen den einzelnen FTC-Netzen angeordnet sind, können dann zusätzlich mit dem Katalysator versehen werden und bewirken eine deutliche Reduktion von N₂O.

Eine Herstellungsvariante für den erfindungsgemäß verwendeten Katalysator besteht darin, dichtgebrannte Raschigringe (oder Kanthalnetze) mit einem gamma-Al₂O₃-Washcoat zu beschichten, diesen bei hoher Temperatur (950°C) zu tempern, um eine Umwandlung zu alpha-Al₂O₃ zu bekommen und dann die Beschichtung mit Rh bzw. Pd-Rh oder RhxOy vorzunehmen. An Stelle von gamma-Al₂O₃ kann auch eine Mischung aus ZrO₂ und gamma-Al₂O₃ verwendet werden - mit der gleichen Behandlung wie oben beschrieben. Ohne diese Behandlung ist die katalytische Aktivität deutlich geringer.

Das erhaltene Material eignet sich als Festbettkatalysator gemäß der Erfindung.

### Beispiel 1

Ein gamma-Al₂O₃ Washcoat wird in bekannter Weise auf Raschigringe oder Kanthalnetze aufgebracht, getrocknet und bei bei 950°C bis zur vollständigen Umwandlung in alpha-Al₂O₃ getempert. Die Beschichtung mit Rh oder Rh₂O₃ bzw. PdRh erfolgt ebenfalls nach bekannten Verfahren.

### Beispiel 2

Zirkonoxid - Extrudates mit einer Länge zwischen 4 mm und 6 mm und einem Durchmesser von ca. 3,5 mm und alpha-Al₂O₃ Pearls (Durchmesser ca. 5 mm) wurden nach bekanntem Verfahren mit Rh, oder Rh₂O₃ bzw. PdRh und Pd beschichtet.

### Beispiel 3 (Vergleich)

Titanoxid und gamma-Al₂O₃ Pearls mit einem Durchmesser von 3-5 mm wurden mit Rh oder PdRh nach bekannten Verfahren beschichtet.

Die in den Beispielen 1 und 2 genannten Katalysatoren wurden unter den Bedingungen des Ostwaldprozesses getestet. Die Katalysatoren wurden unterhalb der Netze zur Oxidation des Ammoniaks angeordnet. Als Referenzsystem wurde ein konventionelles Katalysatorsystem mit Rückgewinnungsnetzen verwendet. Folgende Betriebsbedingungen wurden verwendet: Temperatur=880°C, Druck = 5 bar abs., Ammoniakbeladung= 14,5 t NH₃/m²/Tag, Ammoniakkonzentration = 10,6vol% im Luft/ Ammoniakgemisch.

### Testergebnisse:

| Katalysator | Umsatz Ammoniak [%] | N₂O Reduktion gegenüber konventionellen Netzen [%] | Höhe der Katalysatorschüttung [mm] | |
|---|---|---|---|---|
| 0,6%Rh/ ZrO₂ | 96 | 82 | 30 | Beispiel 2 |
| 0,6% Rh/ alpha-Al₂O₃ | 96 | 70 | 22 | " |
| 0,3% Rh / alpha-Al₂O₃ | 96 | 72 | 30 | " |
| 0,6% Pd / ZrO₂ | 96 | 0 | 22 | " |
| 0,6% PdRh / ZrO₂ | 96 | 84 | 30 | " |
| Rh₂O₃ /Washcoat auf - Raschigringe | 96 | 80 | 100 | Beispiel 1 |
| 0,6% Rh/ gamma-Al₂O₃ | 95 | 0 | 22 | Beispiel 3 |
| 0,6% Rh/ TiO₂ | 96 | 0 | 22 | " |

## Patentansprüche

1. Verwendung eines Katalysators zur Zersetzung von N₂O im Ostwatd-Verfahrens bei 750°C bis 1000°C und 0.9 -15 bar, wobei der Katalysator aus
**A** einem Trägermaterial, wobei das Trägermaterial aus alpha-Al₂O₃ oder ZrO₂ oder CeO₂ oder Mischungen davon besteht, und
**B** einer darauf aufgebrachten Beschichtung aus Rhodium oder Rhodiumoxid oder einem Pd-Rh-Mischkatalysator
besteht.

2. Verwendung nach Anspruch 1, bei dem in **B** die Pd-Rh-Legierung von >0 bis 95% Pd enthält.

3. Verwendung nach Anspruch 2, bei dem in **B** die Pd-Rh-Legierung 30 bis 70% Pd enthält.

4. Verwendung nach einem der vorstehenden Ansprüche, wobei der Katalysator ein Festbettkatalysator ist.

5. Verwendung nach einem der vorstehenden Ansprüche, wobei der Katalysator in Form von Pellets, Raschig-Ringen, Schaum- oder Wabenstrukturen vorliegt.

6. Verwendung nach einem der Ansprüche 1 bis 5, wobei der Katalysator im Strömungsweg den Katalysatornetzen zur NH₃-Oxidation nachgeschaltet angeordnet ist.

## Claims

1. Use of a catalyst for decomposition of N₂O using the Ostwald procedure at 750°C to 1,000°C and 0.9 - 15 bar, whereby the catalyst consists of
**A** a carrier material, whereby the carrier material consists of alpha-Al₂O₃ or ZrO₂ or CeO₂ or mixtures thereof, and
**B** a coating made of rhodium or rhodium oxide or a Pd-Rh mixed catalyst applied onto said carrier material.

2. Use according to claim 1, in which the Pd-Rh alloy in **B** contains > 0 to 95% Pd.

3. Use according to claim 2, in which the Pd-Rh alloy in **B** contains 30 to 70% Pd.

4. Use according to any one of the preceding claims, whereby the catalyst is a fixed bed catalyst.

5. Use according to any one of the preceding claims, whereby the catalyst is present in the form of pellets, Raschig rings, foam structures or honeycomb structures.

6. Use according to any one of the claims 1 to 5, whereby the catalyst is arranged downstream of the catalyst gauzes for NH₃ oxidation.

## Revendications

1. Emploi d'un catalyseur pour décomposer du N₂O dans un procédé Ostwald à 750°C à 1000°C et 0,9 - 15 bar, dans lequel le catalyseur est composé
**A** d'un matériau support, dans lequel le matériau support est composé d'alpha-Al₂O₃ ou de ZrO₂ ou de CeO₂ ou de mélanges de ceux-ci
**B** d'un revêtement appliqué dessus de rhodium ou d'oxyde de rhodium ou d'un catalyseur mixe Pd-Rh.

2. Emploi selon la revendication 1, dans lequel l'alliage Pd-Rh **B** contient de > 0 à 95% de Pd.

3. Emploi selon la revendication 2, dans lequel l'alliage Pd-Rh **B** contient de 30 à 70% de Pd.

4. Emploi selon l'une des revendications précédentes, dans lequel le catalyseur est un catalyseur à lit fixe.

5. Emploi selon l'une des revendications précédentes, dans lequel le catalyseur est présent sous formes de granulés, d'anneaux de Raschig, de structures en mousse ou alvéolaires.

6. Emploi selon l'une des revendications 1 à 5, dans lequel le catalyseur est disposé en aval des réseaux de catalyseur pour l'oxydation du NH₃ dans le sens d'écoulement.
